(19) Europäisches Patentamt
European Patent Office
Office européen des brevets

(11) **EP 4 717 591 A2**

(12) **EUROPÄISCHE PATENTANMELDUNG**

(43) Veröffentlichungstag:
01.04.2026  Patentblatt 2026/14

(21) Anmeldenummer: 26157477.6

(22) Anmeldetag: **07.09.2023**

(51) Internationale Patentklassifikation (IPC):
**B64C 9/24** (2006.01)

(52) Gemeinsame Patentklassifikation (CPC):
**B64C 3/28; B64C 9/24; F03D 1/0643;
F03D 1/06495;** B64C 11/18; B64C 21/04

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorität: **09.09.2022  DE 102022123020**

(62) Dokumentnummer(n) der früheren Anmeldung(en)
nach Art. 76 EPÜ:
**23772119.6 / 4 452 749**

(71) Anmelder: **Schlecht, Paul-Matthias
71032 Böblingen (DE)**

(72) Erfinder: **Schlecht, Paul-Matthias
71032 Böblingen (DE)**

(74) Vertreter: **Wörz, Volker Alfred
Wörz Patentanwälte PartG mbB
Gablenberger Hauptstraße 32
70186 Stuttgart (DE)**

Bemerkungen:
Diese Anmeldung ist am 10-02-2026 als
Teilanmeldung zu der unter INID-Code 62 erwähnten
Anmeldung eingereicht worden.

(54) **FLÜGELANORDNUNG UMFASSEND EINEN HAUPTFLÜGEL UND EINEN ENTGEGEN EINER STRÖMUNGSRICHTUNG VOR DEM HAUPTFLÜGEL DARAN BEFESTIGTEN VORFLÜGEL**

(57)    Die Erfindung betrifft eine Flügelanordnung (10) in der Form eines Propellers eines Flächenflugzeugs oder eines Tragschraubers oder in der Form eines Rotorblatts eines Haupt- und/oder Nebenrotors eines Flugzeugs mit Tragflächen, eines Hubschraubers oder eines Tragschraubers, oder in der Form eines Rotorblatts eines Rotors einer Windkraftanlage. Die Flügelanordnung (10) umfasst einen Hauptflügel (12) und einen entgegen einer Strömungsrichtung (22) vor dem Hauptflügel (12) daran befestigten Vorflügel (14), sodass zwischen dem Vorflügel (14) und dem Hauptflügel (12) ein Spalt (16) mit einem Strömungseinlass (18) und einem definierten, unveränderlichen Strömungsauslass (20) gebildet ist. In einem vertikalen Querschnitt längs der Strömungsrichtung (22) betrachtet beträgt eine Länge (D) eines sich entgegen der Strömungsrichtung (22) über eine Länge (A) des Hauptflügels (12) hinaus nach vorne erstreckenden Abschnitts (32) des Vorflügels (14) mindestens 20% einer Gesamtlänge (C) der Flügelanordnung (10) in Strömungsrichtung (22). Es wird vorgeschlagen, dass der Strömungseinlass (18) größer als der Strömungsauslass (20) ist, sodass sich durch eine Luftströmung (24) in dem Spalt (16) ein Bernoulli-Effekt einstellt.

Fig. 1

**Beschreibung**

Die vorliegende Erfindung betrifft eine Flügelanordnung in der Form eines Propellers eines Flächenflugzeugs oder eines Tragschraubers oder in der Form eines Rotorblatts eines Haupt- und/oder Nebenrotors eines Flugzeugs mit Tragflächen, eines Hubschraubers oder eines Tragschraubers, oder in der Form eines Rotorblatts eines Rotors einer Windkraftanlage. Die Flügelanordnung umfasst einen Hauptflügel und einen entgegen einer Strömungsrichtung vor dem Hauptflügel daran befestigten Vorflügel. Zwischen dem Vorflügel und dem Hauptflügel ist ein Spalt mit einem Strömungseinlass und einem definierten Strömungsauslass gebildet. In einem vertikalen Querschnitt längs der Strömungsrichtung betrachtet beträgt eine Länge (D) eines sich entgegen der Strömungsrichtung über eine Länge (A) des Hauptflügels hinaus nach vorne erstreckenden Abschnitts des Vorflügels mindestens 20% einer Gesamtlänge (C) der Flügelanordnung in Strömungsrichtung.

Solche Flügelanordnungen sind bspw. in der Form von Tragflächen eines Flugzeugs aus dem Stand der Technik bekannt. Ein Beispiel für ein solches Flugzeug mit feststehendem Vorflügel ist bspw. der Fieseler Fi 156 Storch der Gerhard Fieseler Werke, Kassel. Tragflächen mit feststehendem Vorflügel erzielen eine höhere Beschleunigung eines in Strömungsrichtung auf einer Oberseite des Hauptflügels fließenden Luftstroms, sodass ein stärkerer Auftrieb bei geringen Geschwindigkeiten des Flugzeugs und letzten Endes ein Starten und Landen des Flugzeugs bei geringeren Geschwindigkeiten erzielt werden kann. Flugzeuge mit feststehendem Vorflügel weisen einen Spalt zwischen Vorflügel und Hauptflügel mit stets gleich großen Abmessungen von Strömungseinlass und Strömungsauslass auf. Problematisch ist dabei, dass der feststehende Vorflügel einen relativ hohen Luftwiderstand bewirkt, sodass das Flugzeug nur eine relativ geringe Reisegeschwindigkeit erzielen kann.

Ferner sind aus dem Stand der Technik Flugzeuge mit beweglichen Vorflügeln bekannt. Ein Beispiel für ein solches Flugzeug ist der Airbus A300. Dabei wird eine in Strömungsrichtung an einem vorderen Abschnitt des Hauptflügels ausgebildete Nase des Hauptflügels entgegen der Strömungsrichtung nach vorne und/ oder nach unten bewegt, sodass sich zwischen der Nase und dem Hauptflügel ein Spalt mit variablen Abmessungen ausgebildet. Ein anderes Beispiel ist die Boeing 747, die sog. Krügerklappen aufweist. Dabei wird ein unterer Abschnitt des Hauptflügels entgegen der Strömungsrichtung nach unten und vorne bewegt, sodass sich die Oberfläche des Hauptflügels nach vorne verlängert. In diesen Fällen wirkt ein Abschnitt des Hauptflügels als beweglicher Vorflügel. Der bewegliche Abschnitt wird üblicherweise beim Start oder bei der Landung des Flugzeugs ausgefahren, um - in der Regel zusammen mit anderen aerodynamischen Auftriebshilfen, z.B. Landeklappen, etc., - einen erhöhten Auftrieb des Flugzeugs bei geringeren Geschwindigkeiten zu erzielen.

Aus der US 2006/ 169 847 A1 und der DE 694 916 B ist ein beweglicher Vorflügel bekannt, der im Reiseflug bündig an der Vorderseite des Hauptflügels anliegt, so dass zwischen dem Vorflügel und dem Hauptflügel kein Spalt ausgebildet ist, durch den ein Luftstrom zur Auftriebserhöhung strömen könnte. Die WO 2005/ 023 645 A1 offenbart eine Flügelanordnung mit einem feststehenden Hauptflügel und einer absenkbaren Nase, wobei in einem Spalt zwischen der Nase und dem Hauptflügel an einer Oberseite der Flügelanordnung ein Gebläse angeordnet ist. Die US 2009/ 108 142 A1 offenbart eine Flügelanordnung mit einem festen Hauptflügel und einer absenkbaren Nase, wobei zwischen dem festen Hauptflügel und der abgesenkten Nase ein Spalt ausgebildet ist. Die Größe eines Luftstromeinlasses des Spaltes sowie eines Luftstromauslasses des Spaltes hängt von der Position der Nase ab.

Die US 2018/ 363 624 A1 offenbart eine Windkraftanlage mit vertikaler Achse, umfassend: eine Basis, eine zentrale Welle und einen Rotor, der mit der zentralen Welle in Eingriff steht. Der Rotor ist relativ zur zentralen Welle drehbar dund koaxial zu dieser um die vertikale Achse angeordnet. Der Rotor umfasst mehrere Paare von Flügeln, wobei jedes Paar aus einem größeren Außenflügel und einem kleineren Innenflügel besteht. Die äußeren und inneren Flügel definieren mindestens einen Umleitungs- und Verteilungskanal für einen laminaren Strömungseffekt, der durch den inneren Flügel gegen den äußeren Flügel induziert wird.

Ausgehend von dem beschriebenen Stand der Technik liegt der vorliegenden Erfindung die Aufgabe zugrunde, bei einem Propeller oder einem Rotor eine einfache und kostengünstige Möglichkeit zu schaffen, einen in Strömungsrichtung auf einer Oberseite des Hauptflügels fließenden Luftstroms zu beschleunigen, ohne gleichzeitig jedoch den Luftwiderstand übermäßig zu erhöhen.

Zur Lösung dieser Aufgabe wird eine Flügelanordnung mit den Merkmalen des Anspruchs 1 vorgeschlagen. Insbesondere wird ausgehend von der Flügelanordnung der eingangs genannten Art vorgeschlagen, dass der Strömungseinlass größer als der Strömungsauslass ist, sodass sich durch eine Luftströmung in dem Spalt ein Bernoulli-Effekt einstellt. Die Unteransprüche haben vorteilhafte Ausgestaltungen der Erfindung zum Gegenstand.

Der Vorflügel weist in Strömungsrichtung eine relativ lange Erstreckung auf. Insbesondere erstreckt sich der Vorflügel entgegen der Strömungsrichtung soweit über einen vorderen Abschnitt des Hauptflügels hinaus, dass die Länge (D) des sich entgegen der Strömungsrichtung über die Länge (A) des Hauptflügels hinaus nach vorne erstreckenden Abschnitts des Vorflügels mindestens 20% einer Gesamtlänge (C) der Flügelanordnung, umfassend den Hauptflügel und den Vorflügel, in Strömungsrichtung beträgt.

Ein vertikaler Querschnitt im Sinne der vorliegenden Erfindung bezeichnet einen Profilschnitt durch die Flügelanordnung, der senkrecht zu einer Längserstreckung der Flügelanordnung verläuft. Der Begriff der Flügelanordnung verdeutlicht lediglich, dass diese aus Hauptflügel und Vorflügel besteht. Dieser Begriff betrifft nicht die Ausrichtung der Flügelflächen zum Rumpf.

Die erfindungsgemäße Ausgestaltung der Flügelanordnung führt zu einer besonders starken Beschleunigung des Luftstroms auf der Oberseite des Hauptflügels. Dadurch kann der Hauptflügel in einem vertikalen Querschnitt längs der Strömungsrichtung dünner ausgestaltet werden, was wiederum zu einem geringeren Luftwiderstand führt. Das Profil des Hauptflügels kann in dem vertikalen Querschnitt schmaler ausgebildet werden. Die Wölbung des Hauptflügels kann geringer ausgebildet werden als bei herkömmlichen Flügelanordnungen mit Hauptflügel und daran befestigtem Vorflügel.

Der Vorflügel erstreckt sich über die gesamte Länge oder nur einen Teil der Länge des Hauptflügels. Bei Flugzeugen, die eine kurze Start- oder Landestrecke aufweisen sollen, erstreckt sich der Vorflügel bevorzugt über die gesamte Länge des Hauptflügels. Bei Flugzeugen, die eher eine höhere Reisegeschwindigkeit aufweisen sollen, kann sich der Vorflügel nur über einen Teil der Länge des Hauptflügels erstrecken, bevorzugt nur an den Außenseiten, d.h. an den Flügelenden, der Hauptflügel. Die Anordnung der Vorflügel an den Außenseiten hat den Vorteil, dass das Flugzeug aufgrund des längeren Hebels im Langsamflug besser steuerbar ist.

In einem vertikalen Querschnitt längs der Strömungsrichtung betrachtet erstreckt sich der Vorflügel bevorzugt relativ weit über den Hauptflügel. Anders als im Stand der Technik, wo die bekannten Vorflügel lediglich vor einem vorderen Abschnitt des Hauptflügels angeordnet sind, ist der Vorflügel bei der Erfindung zwar auch vor dem vorderen Abschnitt des Hauptflügels angeordnet, er erstreckt sich aber mit seinem hinteren Abschnitt bis über einen vorderen Abschnitt des Hauptflügels hinaus. Insbesondere ist der Strömungsauslass zwischen einer Oberseite des Hauptflügels und einer Unterseite des Vorflügels ausgebildet. In diesem Sinne wird vorgeschlagen, dass in einem vertikalen Querschnitt längs der Strömungsrichtung betrachtet die Summe einer Länge (B) des Vorflügels in Strömungsrichtung und der Länge (A) des Hauptflügels größer ist als die Gesamtlänge (C) der Flügelanordnung in Strömungsrichtung. Die Gesamtlänge ist kürzer als die Summe der Längen von Haupt- und Vorflügel, da der Vorflügel zumindest teilweise oberhalb des Hauptflügels angeordnet ist bzw. diesen überlappt.

Eine entgegen der Strömungsrichtung an einem vorderen Abschnitt des Hauptflügels ausgebildete Nase des Hauptflügels kann bezüglich eines in Strömungsrichtung dahinter angeordneten feststehenden hinteren Abschnitts des Hauptflügels beweglich ausgebildet sein, um die Größe des Strömungseinlasses zu variieren.

Die bewegliche Nase des Hauptflügels hat, bspw. bei Verwendung der Flügelanordnung als Tragfläche eines Flugzeugs, den Vorteil, dass - selbst bei fest an einem feststehenden Abschnitt des Hauptflügels befestigtem Vorflügel, d.h. bei feststehendem und nicht verstellbarem Vorflügel - ein Umschalten eines Betriebsmodus des Flugzeugs zwischen einem Start- oder Landebetrieb und einem Reisebetrieb eines Flugzeugs möglich ist. Bei weg von dem Vorflügel bewegter (also abgesenkter) Nase wird der Strömungseinlass des Spalts zwischen Vorflügel und Hauptflügel vergrößert. Ein durch die Luftströmung durch den Spalt realisierter Bernoulli-Effekt wird verstärkt. Das Flugzeug kann mit einem höheren Anstellwinkel beim Landen geflogen werden, was einen steileren Abstieg ermöglicht. Durch Absenken der Nase des Hauptflügels kann die Sinkrate des Flugzeugs eingestellt werden. Zusätzlich kann die Flügelanordnung auch noch über herkömmliche, aus dem Stand der Technik bekannte Landeklappen verfügen, insbesondere an einem in Strömungsrichtung hinteren Abschnitt des Hauptflügels. Ein Absenken der Nase erlaubt somit geringere Geschwindigkeiten eines Flugzeugs beim Starten und Landen. Während eines Reisebetriebs des Flugzeugs ist die Nase bevorzugt vollständig eingefahren, d.h. in Richtung des Vorflügels bewegt.

Es wird ferner vorgeschlagen, dass während des Bewegens der Nase des Hauptflügels die Größe des Strömungsauslasses unverändert bleibt. Als Größe des Strömungsauslasses wird insbesondere der Abstand zwischen einer Unterseite des Vorflügels und einer Oberseite des Hauptflügels an einem in Strömungsrichtung hinteren Abschnitt des Vorflügels bezeichnet. Der Abstand wird dabei bevorzugt in einem vertikalen Querschnitt durch die Flügelanordnung gemessen, der parallel zu der Strömungsrichtung der Luftströmung durch den Luftspalt verläuft. Mit anderen Worten: der Spalt bleibt unabhängig von der Bewegung der Nase des Hauptflügels immer gleich.

Gemäß einer vorteilhaften Weiterbildung der Erfindung wird vorgeschlagen, dass in einem vertikalen Querschnitt längs der Strömungsrichtung betrachtet eine Länge (B) des Vorflügels in Strömungsrichtung mindestens 50% der Länge (A) des Hauptflügels in Strömungsrichtung beträgt. Bevorzugt beträgt die Länge (B) des Vorflügels zwischen 50% und 80% der Länge (A) des Hauptflügels.

Es wird vorgeschlagen, dass während des Bewegens der Nase eine Oberseite des Hauptflügels in einem vertikalen Querschnitt längs der Strömungsrichtung betrachtet immer einen stetigen Verlauf aufweist. Anders als im Stand der Technik, wo ein vorderer beweglicher Abschnitt eines Hauptflügels nach vorne und/oder nach unten weg von einem feststehenden Abschnitt des Hauptflügels bewegt wird, was zu Unstetigkeitsstellen im Verlauf der Oberseite des Hauptflügels bzw. zum Bilden einer Abrisskante zwischen dem beweglichen und dem feststehenden Abschnitt des Hauptflügels und Luftverwirbelungen führt, bleibt bei der Erfindung die Oberseite des Hauptflügels unabhängig von einer Bewegung der Nase des Hauptflügels kurvenstetig. Durch Bewegen der Nase wird lediglich der Bernoulli-Effekt in dem Spalt zwischen Vorflügel und Hauptflügel variiert, d.h. bei abgesenkter Nase verstärkt und bei eingefahrener Nase verringert.

Es wird vorgeschlagen, dass ein in Strömungsrichtung hinterer Abschnitt des Vorflügels oberhalb eines feststehenden Abschnitts des Hauptflügels angeordnet ist. Besonders bevorzugt überragt also der in Strömungsrichtung hintere Abschnitt des Vorflügels in Strömungsrichtung eine Oberseite eines feststehenden Abschnitts des Hauptflügels. Falls der Hauptflügel eine bewegliche Nase aufweist, ist diese unterhalb des Vorflügels angeordnet.

In diesem Sinne wird vorgeschlagen, dass eine Länge (B) des Vorflügels abzüglich einer Länge (D) eines sich entgegen der Strömungsrichtung über die Länge (A) des Hauptflügels hinaus nach vorne erstreckenden Abschnitts des Vorflügels mindestens 5%, bevorzugt mindestens 10%, besonders bevorzugt mindestens 15% einer Länge (C) der gesamten Flügelanordnung beträgt.

Gemäß einer bevorzugten Ausführungsform der Erfindung wird vorgeschlagen, dass der Vorflügel feststehend an einem feststehenden Abschnitt des Hauptflügels befestigt ist. Die Abmessungen des Luftspalts zwischen dem Vorflügel und dem Hauptflügel bleiben also stets konstant, bevorzugt selbst dann, wenn der Hauptflügel eine bewegliche Nase aufweist.

Alternativ wäre es jedoch auch denkbar, dass der Vorflügel um eine im Wesentlichen quer zur Strömungsrichtung (bzw. parallel zu einer Längserstreckung der Flügelanordnung) verlaufende Achse beweglich an dem feststehenden Abschnitt des Hauptflügels befestigt ist. Eine Bewegung des Vorflügels bezüglich des feststehenden Abschnitts des Hauptflügels erfolgt jedoch nicht, um die Abmessungen des Luftspalts zwischen dem Vorflügel und dem Hauptflügel zu variieren, sondern lediglich dazu, durch Hochstellen des Vorflügels das Flugzeug nachdem es beim Landen auf dem Boden aufgesetzt hat abzubremsen (aerodynamische Bremse nach der Landung). Die Flugeigenschaften eines Flugzeugs während des Starts oder der Landung dürfen nicht durch das Bewegen des Vorflügels beeinflusst werden.

Die erfindungsgemäße Flügelanordnung kann für eine Vielzahl von Anwendungen eingesetzt werden. Insbesondere wird vorgeschlagen, dass die Flügelanordnung als ein Rotorblatt eines Haupt- und/oder Nebenrotors eines Hubschraubers oder als ein Rotorblatt eines Rotors einer Windkraftanlage ausgebildet ist. In diesen Anwendungen kommen die besonderen Merkmale und Vorteile der erfindungsgemäßen Flügelanordnung besonders deutlich zum Tragen. Dies gilt ebenso in starrer Konfiguration (ohne beweglich Nase; fester Bezug Vorflügel zu Hauptflügel) als Propeller für Kolben- oder Turboprop-Flugzeuge.

In diesem Sinne betrifft die vorliegende Erfindung auch ein Flugzeug mit mindestens einem Propeller, wobei der Propeller als eine erfindungsgemäße Flügelanordnung der oben beschriebenen Art ausgebildet ist.

Weitere Merkmale und Vorteile der vorliegenden Erfindung werden nachfolgend anhand der Figuren näher erläutert. Dabei kann jedes der in den Figuren gezeigten Merkmale für sich alleine erfindungswesentlich sein, selbst wenn dies in den Figuren nicht gezeigt und in der Beschreibung nicht ausdrücklich erwähnt ist. Ebenso ist es denkbar, dass mehrere der in den Figuren gezeigten Merkmale in beliebiger Weise miteinander kombiniert werden können, selbst wenn eine solche Kombination in den Figuren nicht gezeigt und in der Beschreibung nicht ausdrücklich erwähnt ist. Es zeigen:

Figur 1     eine erfindungsgemäße Flügelanordnung gemäß einer ersten bevorzugten Ausführungsform;

Figur 2     eine erfindungsgemäße Flügelanordnung gemäß einer weiteren bevorzugten Ausführungsform in einer ersten Stellung;

Figur 3     die erfindungsgemäße Flügelanordnung aus Fig. 2 in einer zweiten Stellung;

Figur 4     die erfindungsgemäße Flügelanordnung aus Fig. 2 in einer dritten Stellung; und

Figur 5     eine erfindungsgemäße Flügelanordnung gemäß einer weiteren bevorzugten Ausführungsform.

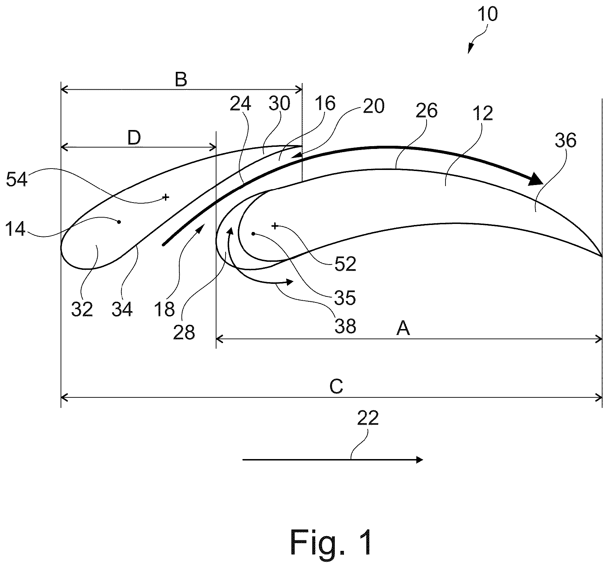

Fig. 1 zeigt in einer schematischen Ansicht in einem vertikalen Querschnitt eine erfindungsgemäße Flügelanordnung 10 in einer ersten bevorzugten Ausführungsform. Die gezeigte Flügelanordnung 10 ist als eine Tragfläche gezeigt. Selbstverständlich könnte die Flügelanordnung 10 jedoch auch als ein Propeller eines Flächenflugzeugs oder eines Tragschraubers oder als ein Rotorblatt eines Haupt- und/oder Nebenrotors eines Flugzeugs mit Tragflächen, eines Hubschraubers, eines Tragschraubers oder einer Drohne, oder als ein Rotorblatt eines Rotors einer Windkraftanlage ausgebildet sein.

Die Flügelanordnung 10 umfasst einen Hauptflügel 12 und einen entgegen einer Strömungsrichtung 22 vor dem Hauptflügel 12 daran befestigten Vorflügel 14. Zwischen dem Vorflügel 14 und dem Hauptflügel 12 ist ein Spalt 16 mit einem Strömungseinlass 18 und einem Strömungsauslass 20 gebildet. Der vertikale Querschnitt verläuft im Wesentlichen senkrecht zu einer Längserstreckung der Flügelanordnung 10 und längs der Strömungsrichtung 22 eines während des Betriebs der Flügelanordnung 10 durch den Spalt 16 fließenden Luftstroms 24.

Um eine einfache und kostengünstige Möglichkeit zu schaffen, einen in Strömungsrichtung 22 auf einer Oberseite 26 des Hauptflügels 12 fließenden Luftstroms 24 zu beschleunigen, ohne gleichzeitig jedoch den Luftwiderstand der Flügelanordnung 10 übermäßig zu erhöhen, wird vorgeschlagen, dass in dem vertikalen Querschnitt längs der Strömungsrichtung 22 betrachtet eine Länge D eines sich entgegen der Strömungsrichtung 22 über eine Länge A des Hauptflügels 12 hinaus nach vorne erstreckenden Abschnitts 32 des Vorflügels 14 mindestens 20% einer Gesamtlänge C der Flügelanordnung 10 in Strömungsrichtung 22 beträgt.

Somit gilt bei der erfindungsgemäßen Flügelanordnung 10 folgender Zusammenhang:

$$D \geq (0{,}2 \times C)$$

Dies kann dadurch erreicht werden, dass der Vorflügel 14 im Vergleich zu bekannten Flügelanordnungen in Strömungsrichtung 22 eine relativ lange Erstreckung B aufweist. Insbesondere erstreckt sich der Vorflügel 14 entgegen der Strömungsrichtung 22 soweit über einen vorderen Abschnitt 35 des Hauptflügels 12 hinaus, dass die Länge D des sich entgegen der Strömungsrichtung 22 über die Länge A des Hauptflügels 12 hinaus nach vorne erstreckenden Abschnitts des Vorflügels 14 mindestens 20% der Gesamtlänge C der Flügelanordnung 10, umfassend den Hauptflügel 12 und den Vorflügel 14, in Strömungsrichtung 22 beträgt.

Die erfindungsgemäße Ausgestaltung der Flügelanordnung 10 führt zu einer besonders starken Beschleunigung des Luftstroms 24 auf der Oberseite 26 des Hauptflügels 12. Dadurch kann der Hauptflügel 12 in dem vertikalen Querschnitt längs der Strömungsrichtung 22 dünner ausgestaltet werden, was wiederum zu einem geringeren Luftwiderstand führt. Das Profil des Hauptflügels 12 kann in dem vertikalen Querschnitt schmaler ausgebildet werden. Zudem kann die Wölbung des Hauptflügels 12 geringer ausgebildet werden als bei herkömmlichen Flügelanordnungen mit Hauptflügel und daran befestigtem Vorflügel.

Durch die im Vergleich zu den aus dem Stand der Technik bekannten Flügelanordnungen relativ große Abmessung B des Vorflügels 14 und die relativ kleine Abmessung A des Hauptflügels 12 kann ein geringer Widerstand der Flügelanordnung 10 und bei Verwendung der Flügelanordnung 10 als Tragfläche für ein Flugzeug eine relativ hohe Reisegeschwindigkeit erzielt werden.

Dennoch kann durch die Flügelanordnung 10 bei Verwendung als Tragfläche für ein Flugzeug ein relativ hoher Auftrieb bei geringen Geschwindigkeiten, insbesondere durch einen entsprechend hohen Anstellwinkel, erreicht werden, was insbesondere beim Starten und Landen des Flugzeugs von Vorteil ist. Dazu kommt ein erheblicher Sicherheitsaspekt: Ein Strömungsabriss wird deutlich hinausgezögert zu niedrigeren Flugzeuggeschwindigkeiten, das heißt der Strömungsabriss wird sanfter, wenn nicht gar unmöglich, da das Flugzeug lediglich in einen sog. Sackflug übergehen kann - bei Aufrechterhaltung der Höhen- und Seitenruderwirkung.

In dem vertikalen Querschnitt längs der Strömungsrichtung 22 betrachtet erstreckt sich der Vorflügel 14 bevorzugt relativ weit über den Hauptflügel 12. In dem gezeigten Beispiel ergibt sich ein hinterer Abschnitt 30 des Vorflügels 14, der sich über den Hauptflügel 12 erstreckt, aus der Differenz der Länge B des Vorflügels in Strömungsrichtung 22 und der Länge D des vorderen Abschnitts 32 des Vorflügels 14, der entgegen der Strömungsrichtung 22 nach vorne über den Hauptflügel 12 hervorragt.

Anders als im Stand der Technik, wo die bekannten Vorflügel lediglich vor einem vorderen Abschnitt des Hauptflügels angeordnet sind, ist der Vorflügel 14 bei der Erfindung zwar auch vor (entgegen der Strömungsrichtung 22) dem vorderen Abschnitt 35 des Hauptflügels 12 angeordnet, er erstreckt sich aber mit seinem hinteren Abschnitt 30 bis über den vorderen Abschnitt 35 des Hauptflügels 12. Insbesondere ist der Strömungsauslass 20 zwischen der Oberseite 26 des Hauptflügels 12 und einer Unterseite 34 des Vorflügels 14 ausgebildet. In diesem Sinne wird vorgeschlagen, dass in dem vertikalen Querschnitt längs der Strömungsrichtung 22 betrachtet die Summe einer Länge B des Vorflügels 14 in Strömungsrichtung 22 und der Länge A des Hauptflügels 12 größer ist als die Gesamtlänge C der Flügelanordnung 10 in Strömungsrichtung 22. Die Gesamtlänge C ist kürzer als die Summe A+B der Längen von Haupt- und Vorflügel 12, 14, da der Vorflügel 14 zumindest teilweise oberhalb des Hauptflügels 12 angeordnet ist bzw. diesen überlappt.

Somit gilt bei der erfindungsgemäßen Flügelanordnung 10 vorzugsweise auch folgender Zusammenhang:

$$C < (A + B)$$

Ferner wird vorgeschlagen, dass in dem vertikalen Querschnitt längs der Strömungsrichtung 22 betrachtet die Länge B des Vorflügels 14 in Strömungsrichtung 22 mindestens 50% der Länge A des Hauptflügels 12 in Strömungsrichtung 22 beträgt. Bevorzugt beträgt in Strömungsrichtung 22 betrachtet die Länge B des Vorflügels 14 zwischen 50% und 80% der Länge A des Hauptflügels 12.

Somit gilt bei der erfindungsgemäßen Flügelanordnung 10 vorzugsweise auch folgender Zusammenhang:

$$B \geq (0{,}5 \times A),$$

bzw.

$$(0{,}5 \times A) \leq B \leq (0{,}8 \times A)$$

Ferner wird vorgeschlagen, dass eine Länge B des Vorflügels 14 abzüglich einer Länge D eines sich entgegen der Strömungsrichtung 22 über die Länge A

des Hauptflügels 12 hinaus nach vorne erstreckenden Abschnitts 32 des Vorflügels 14 mindestens 5%, bevorzugt mindestens 10%, besonders bevorzugt mindestens 15% der Gesamtlänge C der gesamten Flügelanordnung 10 beträgt. Es gilt somit folgender Zusammenhang:

$$(B - D) \geq (0,05 \times C).$$

In dem Beispiel der Fig. 1 ist eine entgegen der Strömungsrichtung 22 an dem vorderen Abschnitt 35 des Hauptflügels 12 ausgebildete Nase 28 des Hauptflügels 12 bezüglich eines in Strömungsrichtung 22 dahinter angeordneten feststehenden hinteren Abschnitts 36 des Hauptflügels 12 beweglich ausgebildet.

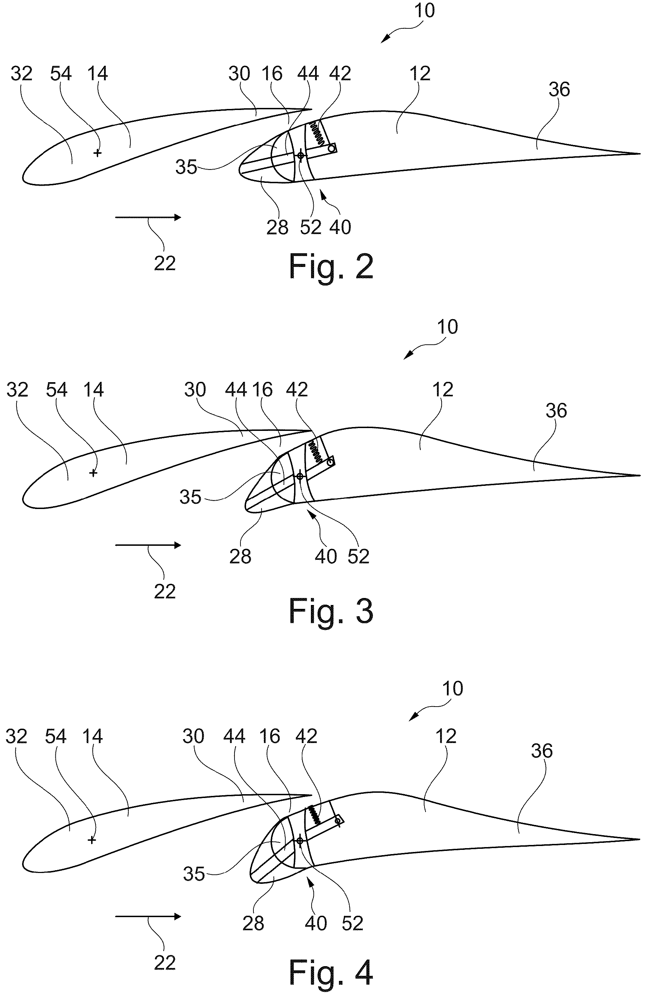

Die Nase 28 ist bevorzugt um eine Achse 52 drehbar, die in etwa parallel zu der Längserstreckung der Flügelanordnung 10 verläuft. Die Drehachse 52 kann auch an einer beliebig anderen Stelle als in den Figuren eingezeichnet angeordnet sein. Ein Bewegen der Nase 28 bewirkt ein Absenken oder Anheben der Nase 28 bzw. eine Vergrößerung bzw. Verringerung des Strömungseinlasses 18. Die Möglichkeit einer Bewegung der Nase 28 des Hauptflügels 12 ist in Fig. 1 durch einen Doppelpfeil 38 angedeutet. Die Bewegung der Nase 28 des Hauptflügels 12 wird nachfolgend unter Bezugnahme auf die Fign. 2-4 näher erläutert.

Dabei ist die Flügelanordnung 10 so ausgebildet, dass in dem vertikalen Querschnitt längs der Strömungsrichtung 22 betrachtet die Länge D des sich entgegen der Strömungsrichtung 22 über die Länge A des Hauptflügels 12 hinaus nach vorne erstreckenden Abschnitts 32 des Vorflügels 14 mindestens 20% der Gesamtlänge C der Flügelanordnung 10 in Strömungsrichtung 22 beträgt.

Erfindungsgemäß bleibt während des Bewegens der Nase 28 des Hauptflügels 12 die Größe des Strömungsauslasses 20 unverändert. Als Größe des Strömungsauslasses 20 wird insbesondere der Abstand zwischen der Unterseite 34 des Vorflügels 14 und der Oberseite 26 des Hauptflügels 12 an dem in Strömungsrichtung 22 hinteren Abschnitt 30 des Vorflügels 14 bezeichnet. Der Abstand wird dabei bevorzugt in dem vertikalen Querschnitt durch die Flügelanordnung 10 gemessen, wie dies in Fig. 1 gezeigt ist. Mit anderen Worten: der Spalt 16 bleibt unabhängig von der Bewegung der Nase 28 des Hauptflügels 12 immer gleich.

Die Fign. 2-4 zeigen verschiedene Stellungen der beweglichen Nase 28 des Hauptflügels 12. In Fig. 2 ist die Nase 28 in einem Winkel von 0° (also vollständig angehoben) gezeigt. In Fig. 3 ist die Nase 28 um einen Winkel von 15° abgesenkt gezeigt. In Fig. 4 ist die Nase 28 um einen Winkel von 25° abgesenkt gezeigt. Die in Fig. 4 gezeigte Stellung kann einer vollständig abgesenkten Nase 28 entsprechen. Es wäre aber auch denkbar, dass die Nase 28 über 25° hinaus weiter abgesenkt werden kann.

Zum Bewegen der Nase 28 kann in dem Hauptflügel 12 ein Verstellmechanismus 40 vorgesehen sein, der einen vorzugsweise elektrischen oder elektromagnetischen Aktor (nicht gezeigt), ein Federelement 42 und ein Verstellgestänge 44 umfasst. Das Federelement 42 sorgt dafür, dass die Nase 28 nach einem Abschalten oder einer Fehlfunktion des Aktors wieder in die vollständig angehobene Stellung aus Fig. 2 gelangt.

Wie man anhand der Fign. 2-4 sehr gut erkennen kann, weist die Oberseite 26 des Hauptflügels 12 in dem vertikalen Querschnitt längs der Strömungsrichtung 22 betrachtet unabhängig von der Stellung der Nase 28 stets einen stetigen Verlauf auf. Durch Bewegen der Nase 28 wird lediglich der Bernoulli-Effekt in dem Spalt 16 zwischen Vorflügel 14 und Hauptflügel 12 variiert, d.h. bei abgesenkter Nase 28 (vgl. Fig. 4) verstärkt und bei eingefahrener Nase 28 (vgl. Fig. 2) verringert.

Ferner wird vorgeschlagen, dass bei der Flügelanordnung 10 der in Strömungsrichtung 22 hintere Abschnitt 30 des Vorflügels 14 oberhalb des feststehenden Abschnitts 36 des Hauptflügels 12 angeordnet ist. Wenn der Hauptflügel 12 eine bewegliche Nase 28 aufweist, ist der feststehende Abschnitt der hintere Abschnitt 36 des Hauptflügels 12. Wenn der Hauptflügel 12 keine bewegliche Nase 28 aufweist, wird der feststehende Abschnitt durch den gesamten Hauptflügel 12 gebildet, z.B. bei Rotor- oder Propeller-Anwendungen.

Bei der Flügelanordnung 10, bei der der hintere Abschnitt 30 des Vorflügels 14 oberhalb des feststehenden Abschnitts 36 des Hauptflügels 12 angeordnet ist, kann die Flügelanordnung 10 ebenfalls so ausgebildet sein, dass in dem vertikalen Querschnitt längs der Strömungsrichtung 22 betrachtet die Länge D des sich entgegen der Strömungsrichtung 22 über die Länge A des Hauptflügels 12 hinaus nach vorne erstreckenden Abschnitts 32 des Vorflügels 14 mindestens 20% einer Gesamtlänge C der Flügelanordnung 10 in Strömungsrichtung 22 beträgt. Ferner kann diese Flügelanordnung 10 ebenfalls so ausgebildet sein, dass die in Strömungsrichtung 22 an dem vorderen Abschnitt 35 des Hauptflügels 12 ausgebildete Nase 28 des Hauptflügels 12 bezüglich des in Strömungsrichtung 22 dahinter angeordneten feststehenden hinteren Abschnitts 36 des Hauptflügels 12 beweglich ausgebildet ist, um die Größe des Strömungseinlasses 18 zu variieren.

Diese Flügelanordnung 10, bei der der hintere Abschnitt 30 des Vorflügels 14 oberhalb des feststehenden Abschnitts 36 des Hauptflügels 12 angeordnet ist, hat die angegebenen Vorteile jedoch auch, wenn in dem vertikalen Querschnitt längs der Strömungsrichtung 22 betrachtet die Länge D des sich entgegen der Strömungsrichtung 22 über die Länge A des Hauptflügels 12 hinaus nach vorne erstreckenden Abschnitts 32 des Vorflügels 14 nicht mindestens 20% der Gesamtlänge C der Flügelanordnung 10, sondern weniger beträgt, oder wenn die in Strömungsrichtung 22 an dem vorderen Abschnitt 35 des Hauptflügels 12 ausgebildete Nase 28 des Hauptflügels 12 bezüglich des in Strömungsrichtung 22 dahinter angeordneten feststehenden hinteren Abschnitts 36 des Hauptflügels 12 nicht beweglich ausgebildet ist, sondern feststehend ist.

Besonders bevorzugt überragt also der in Strömungsrichtung 22 hintere Abschnitt 30 des Vorflügels 14 in Strömungsrichtung 22 die Oberseite 26 des feststehenden Abschnitts 36 des Hauptflügels 14. Falls der Hauptflügel 12 eine bewegliche Nase 28 aufweist, ist diese unterhalb des Vorflügels 14 angeordnet, sodass sich dazwischen der Strömungseinlass 18 des Spalts 16 ausbildet.

Bevorzugt ist der Vorflügel 14 feststehend an dem feststehenden Abschnitt 36 des Hauptflügels 12 befestigt. Die Abmessungen des Luftspalts 16 bzw. des Strömungsauslasses 20 zwischen dem Vorflügel 14 und dem Hauptflügel 12 bleiben also stets konstant, bevorzugt selbst dann, wenn der Hauptflügel 12 eine bewegliche Nase 28 aufweist.

Alternativ wäre es jedoch auch denkbar, dass der Vorflügel 14 um eine im Wesentlichen quer zur Strömungsrichtung 22 (bzw. parallel zur Längserstreckung der Flügelanordnung 10) verlaufende Achse 54 beweglich an dem feststehenden Abschnitt 36 des Hauptflügels 12 befestigt ist. Die Achse 54 kann auch an einer beliebig anderen Stelle als in den Figuren eingezeichnet angeordnet sein. Insbesondere kann die Achse 54 auch außerhalb des Vorflügel-Querschnitts verlaufen. Eine Bewegung des Vorflügels 14 bezüglich des Hauptflügels 12 erfolgt bevorzugt nicht, um die Abmessungen des Luftspalts 16 bzw. des Strömungsauslasses 20 zwischen dem Vorflügel 14 und dem Hauptflügel 12 zu variieren, sondern lediglich dazu, durch Hochstellen des Vorflügels 14, das Flugzeug - nachdem es beim Landen auf dem Boden aufgesetzt hat - zusätzlich abzubremsen. Die Flugeigenschaften des Flugzeugs während des Starts oder der Landung werden durch das Bewegen des Vorflügels 14 bevorzugt nicht beeinflusst bzw. der Vorflügel 14 wird erst nach der Landung bewegt, wenn das Flugzeug bereits auf dem Boden aufgekommen ist.

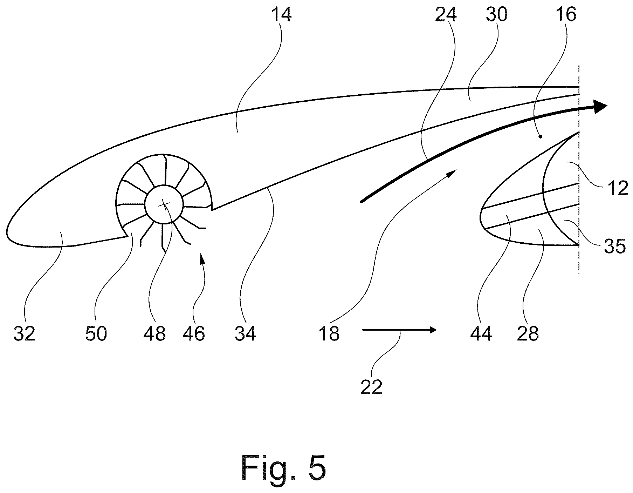

In dem Ausführungsbeispiel der Fig. 5 dargestellt, kann dem Spalt 16 bzw. dem Strömungseinlass 18 ein Gebläse 46, insbesondere ein Radialgebläse, zugeordnet sein, das ausgebildet ist, den in Strömungsrichtung 22 durch den Spalt 16 fließenden Luftstrom 24 zu verstärken. Dies macht allerdings nur Sinn, wenn die Flügelanordnung 10 als eine Tragfläche eines Flugzeugs ausgebildet ist, was jedoch nicht von der vorliegenden Erfindung umfasst ist. Eine Drehachse 48 des Gebläses 46 verläuft bevorzugt in etwa parallel zu der Längserstreckung der Flügelanordnung 10. In dem Beispiel der Fig. 5 ist das Radialgebläse 46 in einer Längsvertiefung 50 auf der Unterseite 34 des Vorflügels 14 angeordnet. Selbstverständlich kann auch jede andere Art von Gebläse 46 verwendet werden, um bei Bedarf oder nach Wunsch die Luftströmung 24 in dem Spalt 16 zu beschleunigen.

Das Gebläse 46 wird bevorzugt bei einem Langsamflug, d.h. während des Starts und/oder der Landung des Flugzeugs, eingeschaltet. Auf diese Weise kann die erforderliche Geschwindigkeit des Flugzeugs beim Start und Landen, und damit die erforderliche Länge einer Start- und Landebahn, weiter verringert werden. Für reine Segelflugzeuge kann das Gebläse 46 auch als ein sog. Range-Extender eingesetzt werden, bspw. wenn die Thermik nachlässt oder ganz aussetzt, um den Auftrieb zu erhöhen und die Reichweite zu verlängern.

Das Gebläse 46 kann durch einen Elektromotor (nicht dargestellt) angetrieben werden, der Energie aus einem elektrischen Energiespeicher (nicht dargestellt), insbesondere einer aufladbaren Batterie oder einem Kondensator, bezieht. Der Energiespeicher kann an Bord des Flugzeugs verbaut sein. Es ist denkbar, dass der Energiespeicher mittels Solarzellen aufgeladen wird. Die Solarzellen können auf den Oberflächen der Flügelanordnung 10, vorzugsweise der Oberseite des Vorflügels 14 und/oder der Oberseite 26 des Hauptflügels 12, und/oder auf dem Rumpf oder einem sonstigen Leitwerk des Flugzeugs angeordnet sein. Auf diese Weise kann das Gebläse 46 autark (ohne Zufuhr zusätzlicher Energie von außerhalb des Flugzeugs) betrieben werden.

Die erfindungsgemäße Flügelanordnung 10 kann für eine Vielzahl von Anwendungen eingesetzt werden. Insbesondere wird vorgeschlagen, dass die Flügelanordnung 10 als ein Rotorblatt eines Haupt- und/oder Nebenrotors eines Hubschraubers oder als ein Rotorblatt eines Rotors einer Windkraftanlage ausgebildet ist. Ebenso wäre es denkbar, die Erfindung in einem Hauptrotor und in starrer Konfiguration in einem Propeller einer Drohne oder eines Gyrokopters (Tragschrauber) einzusetzen. Ebenso als Propeller für motor- und turbinengetriebene Flächenflugzeuge, hier vorzugsweise mit fixer Spaltanordnung, also ohne bewegliche Nase. In all diesen Anwendungen kommen die besonderen Merkmale und Vorteile der erfindungsgemäßen Flügelanordnung besonders deutlich zum Tragen.

**Patentansprüche**

1. Flügelanordnung (10) in der Form eines Propellers eines Flächenflugzeugs oder eines Tragschraubers oder in der Form eines Rotorblatts eines Haupt- und/oder Nebenrotors eines Flugzeugs mit Tragflächen, eines Hubschraubers oder eines Tragschraubers, oder in der Form eines Rotorblatts eines Rotors einer Windkraftanlage,

   wobei die Flügelanordnung (10) einen Hauptflügel (12) und einen entgegen einer Strömungsrichtung (22) vor dem Hauptflügel (12) daran befestigten Vorflügel (14) umfasst, sodass zwischen dem Vorflügel (14) und dem Hauptflügel (12) ein Spalt (16) mit einem Strömungseinlass (18) und einem definierten, unveränderlichen Strömungsauslass (20) gebildet ist, und

wobei in einem vertikalen Querschnitt längs der Strömungsrichtung (22) betrachtet eine Länge (D) eines sich entgegen der Strömungsrichtung (22) über eine Länge (A) des Hauptflügels (12) hinaus nach vorne erstreckenden Abschnitts (32) des Vorflügels (14) mindestens 20% einer Gesamtlänge (C) der Flügelanordnung (10) in Strömungsrichtung (22) beträgt,

**dadurch gekennzeichnet, dass**

der Strömungseinlass (18) größer als der Strömungsauslass (20) ist, sodass sich durch eine Luftströmung (24) in dem Spalt (16) ein Bernoulli-Effekt einstellt.

2. Flügelanordnung (10) nach Anspruch 1, wobei der Vorflügel (14) auf einer konvex gewölbten Oberseite (26) des Hauptflügels (12) angeordnet ist.

3. Flügelanordnung (10) nach Anspruch 1 oder 2, wobei der Strömungsauslass (20) zwischen einer konvex gewölbten Oberseite (26) des Hauptflügels (1") und einer konkav gewölbten Unterseite (34) des Vorflügels (14) ausgebildet ist.

4. Flügelanordnung (10) nach einem der vorhergehenden Ansprüche, wobei in dem vertikalen Querschnitt längs der Strömungsrichtung (22) betrachtet die Summe einer Länge (B) des Vorflügels (14) in Strömungsrichtung (22) und der Länge (A) des Hauptflügels (12) größer ist als die Gesamtlänge (C) der Flügelanordnung (10) in Strömungsrichtung (22).

5. Flügelanordnung (10) nach einem der vorhergehenden Ansprüche oder 2, wobei in dem vertikalen Querschnitt längs der Strömungsrichtung (22) betrachtet eine Länge (B) des Vorflügels (14) in Strömungsrichtung (22) mindestens 50% der Länge (A) des Hauptflügels (12) in Strömungsrichtung (22) beträgt.

6. Flügelanordnung (10) nach einem der vorhergehenden Ansprüche, wobei eine Länge (B) des Vorflügels (14) in Strömungsrichtung (22) abzüglich der Länge (D) des sich entgegen der Strömungsrichtung (22) über die Länge (A) des Hauptflügels (12) hinaus nach vorne erstreckenden Abschnitts (32) des Vorflügels (14) mindestens 5%, bevorzugt mindestens 10%, besonders bevorzugt mindestens 15% der Gesamtlänge (C) der Flügelanordnung (10) beträgt.

7. Flügelanordnung (10) nach einem der vorhergehenden Ansprüche, wobei der Vorflügel (14) feststehend an einem feststehenden Abschnitt (36) des Hauptflügels (12) befestigt ist.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- US 2006169847 A1
- DE 694916 B
- WO 2005023645 A1
- US 2009108142 A1
- US 2018363624 A1